Europäisches Patentamt

(19) **European Patent Office**

**Office européen des brevets**

(11) Veröffentlichungsnummer: **0 256 161**
B1

(12) ## EUROPÄISCHE PATENTSCHRIFT

(45) Veröffentlichungstag der Patentschrift:
25.07.90

(21) Anmeldenummer: **86111487.4**

(22) Anmeldetag: **19.08.86**

(51) Int. Cl.⁵: **F16K 11/22**, F16K 1/14

(54) **Mischventil.**

(43) Veröffentlichungstag der Anmeldung:
**24.02.88 Patentblatt 88/8**

(45) Bekanntmachung des Hinweises auf die Patenterteilung:
**25.07.90 Patentblatt 90/30**

(84) Benannte Vertragsstaaten:
**DE FR GB NL**

(56) Entgegenhaltungen:
**DD-A- 58 213**
**DE-A- 2 824 873**
**DE-U- 1 603 151**
**GB-A- 1 324 138**
**US-A- 1 574 767**
**US-A- 3 746 048**
**US-A- 4 134 420**
**US-A- 4 387 715**

(73) Patentinhaber: **Hewlett-Packard GmbH, Herrenberger Strasse 130 Postfach 14 30, D-7030 Böblingen(DE)**

(72) Erfinder: **Härtl, Hans-Georg, Dipl.-Ing. (FH), Ottostrasse 2d, D-7500 Karlsruhe-Durlach(DE)**

(74) Vertreter: **Schulte, Knud, Dipl.-Ing. et al, c/o Hewlett-Packard GmbH Europ. Patent- und Lizenzabteilung Postfach 1430 Herrenberger Strasse 130, D-7030 Böblingen(DE)**

ACTORUM AG

**Beschreibung**

Die Erfindung betrifft ein Mischventil gemäß dem Oberbegriff von Patentanspruch 1. Derartige Ventile werden in der Flüssigkeitschromatographie eingesetzt, wenn mehrere Flüssigkeiten in genauem Verhältnis gemischt werden müssen, beispielsweise zum Erzeugen eines Lösungsmittelgradienten.

In der Flüssigkeitschromatographie ist das Mischen von Lösungsmitteln weit verbreitet und unter der Bezeichnung Niederdruck-Gradientenmischung bekannt. Dabei werden von einer zum Chromatographen gehörenden Pumpe nacheinander kleine Mengen verschiedener Lösungsmittel aus mehreren Vorratsbehältern angesaugt und dann gemischt weiterbefördert. Das Mischventil ist dabei zwischen Vorratsbehälter und Pumpe angeordnet. Durch das Ventil wird jeweils nur einer der Vorratsbehälter mit der saugenden Pumpe verbunden. Da zum Erreichen einer hohen chromatographischen Meßgenauigkeit die jeweiligen Mischungsverhältnisse genau eingehalten werden müssen, sind die Anforderungen an das Ventil sehr hoch.

Es sind Mischventile bekannt, welche aus vier Ventileinheiten bestehen mit je einem Zufluß für das anzusaugende Lösungsmittel und einem Schließelement für jede Ventileinheit sowie mit einer für die vier Ventileinheiten gemeinsamen Abflußleitung. Entsprechend der Aktivierung der Schließelemente über zugehörige Hubmagnete wird Flüssigkeit aus jeweils einem von vier mit jeweils einer der Ventileinheiten verbundenen Vorratsbehältern angesaugt. Bei dem bekannten Mischventil umfaßt das Schließelement ein konisches Teflonstück und einen entsprechenden konischen Ventilsitz, der zum Erreichen einer möglichst guten Dichtwirkung ebenfalls aus Teflon besteht. Zum Schließen bzw. Öffnen der jeweiligen Ventileinheit wird das konische Teflonstück über ein Betätigungselement in den Ventilsitz geschoben oder aus diesem zurückgezogen. Bei dem bekannten Mischventil verformen sich die Dichtpartner im Laufe der Lebensdauer des Ventils, so daß sich die zum vollständigen Schließen bzw. Öffnen des Ventils erforderlichen Schaltzeiten vergrößern. Die Schaltzeiten werden schließlich so groß, daß das Mischventil nicht mehr zufriedenstellend arbeitet und durch ein neues ersetzt werden muß.

Ein Mischventil mit vier Ventileinheiten ist bekannt aus US-A 3 746 048. Die Ventileinheiten umfassen dabei jeweils ein Dreiwegeventil mit einem Flüssigkeitseinlaß, einen in eine gemeinsame Mischkammer mündenden Flüssigkeitsauslaß, einen weiteren Auslaß für überschüssige Flüssigkeit sowie ein Schließelement. Die Schließelemente sind jeweils ausgebildet als halbkreisförmige, drehbare Scheiben, mit denen in Abhänbgigkeit vom Drehwinkel unterschiedliche Flußraten für die durch die jeweilige Ventileinheit strömende Flüssigkeit eingestellt werden kann. Mit dieser Art von Analogventil soll sichergestellt werden, daß bei Flüssigkeiten mit unterschiedlichen rheologischen Eigenschaften, wie etwa Viskosität oder Druck, das Mischungsverhältnis sowohl sofort bei Inbetriebnahme des Mischventils als auch im stationären Betrieb konstant ist.

Dies ist erforderlich beim Mischen von Flüssigkeiten bei Schaum-Spritzgußverfahren, wo Flüssigkeiten mit stark voneinander abweichenden Fließeigenschaften verwendet werden. Die vier scheibenförmigen Schließelemente sind über ein Getriebe gekoppelt, so daß sie stets gemeinsam betätigt werden.

Die Erfindung gemäß Patentanspruch 1 löst die Aufgabe, ein Mischventil für die Flüssigkeitschromatographie zu schaffen, welches das Erzeugen genauer Mischungsverhältnisse ermöglicht und dabei eine lange Lebensdauer hat und welches lösungsmittelbeständig und einfach herzustellen ist.

Gemäß der Erfindung weist jede Ventileinheit des Mischventils ein Kugelventil mit einer Ventilkugel und mit einem Ventilsitz aus hartem Material, einen Betätigungsstößel zum Bewegen der Ventilkugel in die Schließstellung sowie einen in den Ventilsitz hineinragenden Betätigungsstift auf, welcher aufgrund von Federkraft gegen die Ventilkugel drückt und bewirkt, daß bei aus der Schließstellung zurückgezogenem Betätigungsstößel die Ventilkugel aus dem Ventilsitz gedrückt wird und damit den Durchgang für Flüssigkeit vom Ventileinlaß zum Ventilauslaß freigibt. Somit ist gegenüber dem bekannten Mischventil eine wesentlich höhere Zahl von Schaltzyklen mit stets gleichbleibender Schaltzeit möglich. Ein weiterer Vorteil besteht darin, daß die Schaltzeiten des Ventils sehr klein sind, kleiner als etwa 2 Millisekunden, so daß ein schnelles Ansprechen des Ventils gewährleistet ist. Durch Verwenden eines Betätigungsstiftes, der bei freigegebener Ventilkugel die Kugel aus dem Ventilsitz drückt, wird vermieden, daß die bei manchen Lösungsmitteln auftretende elektrostatische Aufladung der beiden Dichtpartner zu einem unerwünschten Haften der Kugel auf dem Sitz führt. Die das Kugelventil umschließende Ventilkammer ist auf ihrer dem Betätigungsstößel zugewandten Seite mit einer Membran abgeschlossen und der Ventilkörper besteht aus Perfluoralkoxy.

Aus GB-A 1 324 138 ist es im Zusammenhang mit einem Hydraulik-Steuerventil, insbesondere für Grubenstempel im Bergbau, bekannt, ein Kugelventil vorzusehen, bei welchem zum Öffnen des Ventils die Kugel mittels einer Kolbenstange aus dem Sitz gedrückt wird. Auf der der Kolbenstange abgewandten Seite wirkt eine unter Federkraft stehende zweite Kolbenstange auf die Kugel ein. Die von der Feder ausgeübte Kraft wirkt der von der ersten Kolbenstange zur Ventilöffnung ausgeübten Kraft entgegen. Die Betätigungskraft zum Öffnen des Ventils wird höchstens so groß wie die von der Feder ausgeübte Kraft gewählt, um zu verhindern, daß das Hydraulikmedium im Grubenstempel, welches unter höherem Druck als der Druckerzeuger steht, sich zu dem Druckerzeuger hin entspannt.

Gemäß Anspruch 3 kann zur weiteren Verlängerung der Lebensdauer des Mischventils ein Kugelhalter vorgesehen werden, durch welchen eine Verformung der Membran durch die Ventilkugel und damit ein frühzeitiger Ausfall des Ventils vermieden wird.

Werden die im Anspruch 5 angegebenen Materialien für die mit Flüssigkeit in Berührung kommenden Teile des Mischventils verwendet, kann eine mögliche Abgabe von Schwermetallionen in die Flüssigkeit ausgeschlossen werden, was insbesondere in der Biotechnologie von besonderem Vorteil ist.

Gemäß einer weiteren vorteilhaften Ausgestaltung der Erfindung nach Anspruch 6 können die Ventileinheiten des Mischventils voneinander lösbar sein, so daß einzelne Ventileinheiten bei Bedarf, etwa bei einer erforderlichen Reparatur, ausgetauscht werden können. Damit muß im Unterschied zum Stand der Technik bei einem Fehler in einer der Ventileinheiten nicht der gesamte Mischventilblock erneuert werden, wodurch die nutzbare Lebensdauer des Mischventils evenfalls erhöht wird. Außerdem ist es somit möglich, einzelne Ventileinheiten durch diesen in der Form angepaßte Blindplatten zu ersetzen, wenn bei der jeweiligen Anwendung nicht alle Ventileinheiten an Flüssigkeitsvorratsbehältern angeschlossen sind. Auf diese Weise kann das Mischventil an die jeweils verwendete Zahl von verschiedenen Lösungsmitteln angepaßt werden, ohne daß jeweils das gesamte Mischventil ausgetauscht werden muß.

Nachfolgend wird ein Ausführungsbeispiel der Erfindung anhand der Zeichnung näher erläutert. In der Zeichnung zeigen:

Figur 1: Ein erfindungsgemäßes Mischventil in perspektivischer Darstellung, wobei in den einzelnen Figuren 1a bis 1f jeweils ein Einzelteil des Ventils gezeigt ist, und
Figur 2: eine Ventileinheit des erfindungsgemäßen Mischventils im Querschnitt.

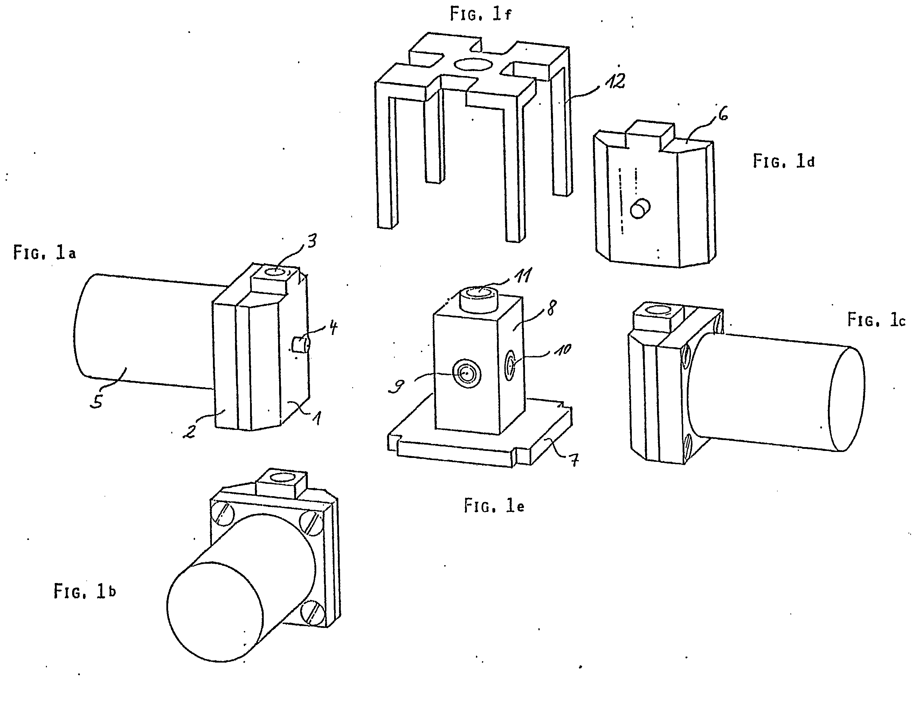

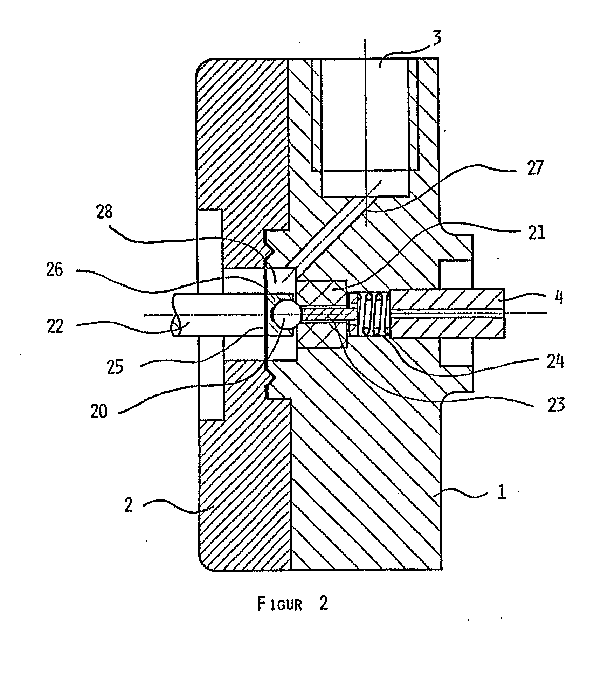

In den Figuren 1a bis 1f sind die Einzelteile eines Mischventils gemäß der Erfindung in zerlegtem Zustand schematisch dargestellt. Das Mischventil gemäß Figuren 1a bis 1f umfaßt drei Ventileinheiten, die jeweils in den Figuren 1a, 1b bzw. 1c dargestellt sind, sowie einen Blindstopfen 6, der in Figur 1d gezeigt ist. Im zusammengebauten Zustand sind die drei Ventileinheiten und der Blindstopfen 6 um ein in Figur 1e gezeigtes Zentralelement angeordnet und werden durch ein in Figur 1f gezeigtes Klammerelement 12 mit dem Zentralelement in Berührung gebracht. Die drei dargestellten Ventileinheiten haben im wesentlichen den gleichen Aufbau und weisen jeweils einen Flüssigkeitseinlaß 3, einen Flüssigkeitsauslaß 4, einen Ventilkörper 1, ein mit dem Ventilkörper verschraubtes Adapterstück 2 und einen Hubmagneten 5 auf. Das Schließelement des Ventiles befindet sich in dem Ventilkörper 1 und ist weiter unten im Zusammenhang mit Figur 2 beschrieben. Die Ventilauslässe der einzelnen Ventileinheiten sind bei zusammengesetztem Ventil mit den entsprechenden Einlässen des Mittelstückes (Figur 1e) verbunden und münden in einen gemeinsamen Auslaßkanal, der innerhalb des Mittelstückes 8 verläuft. Beispielsweise sind die Auslässe der in Figur 1b und Figur 1c gezeigten Ventileinheiten mit den Einlässen 9 bzw. 10 des Mittelstücks verbunden. Der gemeinsame Auslaßkanal im Mittelstück 8 endet in einem Auslaß 11, welcher mit einer Pumpe verbindbar ist zum Ansaugen der Flüssigkeit aus verschiedenen Vorratsbehältern, die jeweils mit einem Ventileinlaß verbunden sind. Die Ventileinheiten werden durch Betätigung des zugehörigen Hubmagneten geöffnet bzw. geschlossen.

In Abhängigkeit von dem jeweils betätigten Hubmagneten werden Flüssigkeiten aus unterschiedlichen Vorratsbehältern angesaugt, so daß ein gewünschter Lösungsmittelgradient erzeugt werden kann.

Wenn ein zusätzlicher Vorratsbehälter angeschlossen werden soll, kann der Blindstopfen 6 durch eine Ventileinheit, wie die in Figuren 1a bis 1c dargestellten, ersetzt werden. Ebenso könnten zwei Blindstopfen vorgesehen sein, wenn nur zwei Vorratsbehälter verwendet werden. Die Erfindung ist auch nicht darauf beschränkt, daß vier Ventileinheiten zusammengefaßt werden, vielmehr ist jede beliebige Anzahl von Ventileinheiten bzw. entsprechende Blindstopfen denkbar. Wesentlich ist, daß das erfindungsgemäße Mischventil modular aufgebaut ist, so daß einzelne Ventileinheiten entweder durch einen Blindstopfen oder durch eine neue Ventileinheit ersetzt werden können. Damit wird unter anderem der Vorteil erreicht, daß bei einem defekten Schließelement nicht das gesamte Mischventil sondern nur eine einzelne Ventileinheit ausgetauscht werden muß.

In Figur 2 ist eine Ventileinheit des aus mehreren Ventileinheiten bestehenden Mischventils gemäß den Figuren 1a bis 1f dargestellt. Die Ventileinheit umfaßt einen Ventilkörper 1 aus einem spritzbaren, lösungsmittelbeständigen Kunststoff, beispielsweise Perfluoralkoxy (PFA), der nicht spanabhebend bearbeitet werden muß, und ein mit diesem verschraubbares Adapterstück 2 aus einem harten Kunststoff. Die Flüssigkeit gelangt durch den Ventileinlaß 3 in die Ventileinheit. Die Einlaßöffnung kann mit einem Gewinde versehen sein, so daß eine zu einem Flüssigkeitsvorratsbehälter führende Zuleitung eingeschraubt werden kann. Durch einen schräg verlaufenden Einlaßkanal 27 tritt die Flüssigkeit dann in die Ventilkammer 28 ein. Die Ventilkammer 28 ist auf einer Seite durch eine zwischen dem Adapterstück 2 und dem Ventilkörper eingespannte Teflonmembran 25 abgedichtet. Das Ventil ist als Kugelventil ausgebildet mit einer Ventilkugel 20 aus Rubin und mit einem Ventilsitz 21 aus Saphir. Ventilkugel 20 und Ventilsitz 21 sind dabei zum Erreichen einer guten Dichtwirkung aufeinander eingeschliffen. Die Rubinkugel 20 ist in einem Kugelhalter 26 gelagert, um zu vermeiden, daß die Teflonmembran am Auflagepunkt der Kugel verformt oder beschädigt wird, was zu einem vorzeitigen Ausfall des Ventils führen würde. Der Kugelhalter 26 ist in dem gezeigten Ausführungsbeispiel als Metallzylinder mit einem Sackloch ausgeführt, welches zunächst mit einem etwas größeren Durchmesser als die Ventilkugel zylindrisch und dann kegelstumpfförmig verläuft. Es wäre jedoch auch möglich, auf einen Kugelhalter zu verzichten, wenn eine Verformung der Membran unkritisch ist.

Auf der der Ventilkammer 28 abgewandten Seite der Teflonmembran 25 befindet sich ein Betätigungsstößel 22, der mit einem Hubmagneten 5 (Figur 1a) verbunden ist. Bei dem in Figur 2 dargestellten Zustand des Ventils drückt der Betätigungsstößel gegen die Teflonmembran und bewirkt somit, daß die Kugel in den Sitz gedrückt wird und das Ventil geschlossen ist.

Durch den Ventilsitz hindurch ragt ein Betätigungsstift 23 , der durch eine Feder 24 gegen die Ventilkugel 20 gedrückt wird. Die in dem gezeigten Beispiel als Schraubenfeder 24 ausgebildete Feder stützt sich auf der einen Seite an dem verbreiterten Kopf des Betätigungsstiftes 23 und mit der anderen Seite an einem als Hohlzylinder ausgebildeten Auslaßstück 4 ab. Um das Ventil zu öffnen, wird der Betätigungsstößel 22 durch den Hubmagneten 5 zurückgezogen, so daß der Betätigungsstift 23 aufgrund der Kraftwirkung der Feder 24 die Kugel 20 aus dem Sitz drückt. Der Kopf des Betätigungsstiftes 23 weist zwei Durchgangsbohrungen auf, durch die bei geöffnetem Ventil Flüssigkeit in Richtung zu dem Auslaßstück 4 hindurchströmen kann, selbst wenn der Kopf auf dem Ventilsitz aufliegt.

Das hohlzylindrische Auslaßstück 4 mündet, ebenso wie die Auslaßstücke der anderen Ventileinheiten des Mischventils, in eine gemeinsame Abflußleitung, welche mit einer Pumpe zum Ansaugen der Flüssigkeit verbunden werden kann. Die gemeinsame Abflußleitung verläuft bei dem vorliegenden Ausführungsbeispiel in dem Mittelstück 8 und endet in einem gemeinsamen Auslaß 11, welcher mit einem Gewinde für den Anschluß einer Leitung versehen sein kann. Das Mittelstück 8 besteht bei einem Ausführungsbeispiel der Erfindung ebenso wie der Ventilkörper 1 aus PFA. Zwischen dem Mittelstück 8 und den Ventileinheiten befinden sich jeweils eingespritzte Dichtelemente (nicht dargestellt), die ringförmig um das jeweilige Auslaßstück 4 angeordnet sind und von einer Feder unterstützt werden.

Bei einer Ausführungsmöglichkeit der Erfindung hat die Ventilkugel einen Durchmesser von 1,75 mm. Der lichte Durchmesser des Ventilsitzes beträgt 1,2 mm, der Durchmesser des Betätigungsstiftes ist 0,7 mm. Der Betätigungsstift 23, die Feder 24, der Kugelhalter 26 sowie das Auslaßstück 4 sind in einer Ausführung der Erfindung aus Edelstahl gefertigt.

Es versteht sich, daß die Erfindung nicht auf das oben beschriebene und in der Zeichnung dargestellte Ausführungsbeispiel beschränkt ist. Beispielsweise könnten die Ventilkugel und der Ventilsitz anstatt aus Rubin und Saphir aus anderen harten Materialien bestehen. Als Materialien für den Betätigungsstift und die Feder kommt auch Titan in Frage, welches gegenüber Edelstahl den Vorteil hat, daß es keine Schwermetallionen abgibt, die die zu untersuchende Probe schädigen oder zerstören würde. Aus dem gleichen Grund können für den Kugelhalter Keramik oder Glas verwendet werden. Auch bezüglich der Form der Ventileinheiten sind gegenüber dem in Figur 1 gezeigten Beispiel mannigfache Abwandlungen möglich, beispielsweise kann zum Zwecke einer Material- und Gewichtsersparnis überschüssiges Material aus den Ventileinheiten und dem Mittelstück entfernt sein.

**Patentansprüche**

1. Mischventil zum Mischen mehrerer Flüssigkeiten in einem vorbestimmten Mischungsverhältnis, insbesondere für die Flüssigkeitschromatographie zum Erzeugen eines Lösungsmittelgradienten, mit folgenden Bestandteilen:

a) eine der Anzahl der zu mischenden Flüssigkeiten entsprechende Anzahl von Ventileinheiten mit jeweils einem Ventileinlaß für den Eintritt der jeweiligen Flüssigkeit in eine Ventilkammer, mit jeweils einem Ventilauslaß für den Austritt der Flüssigkeit, mit jeweils einem Schließelement zum Unterbrechen des Flüssigkeitsstromes zwischen Ventileinlaß und Ventilauslaß sowie mit jeweils einem Betätigungselement zum Betätigen des Schließelementes und

b) mit jedem der Ventilauslässe verbunde Ausgangsleitung, dadurch gekennzeichnet, daß jede der Ventileinheiten umfaßt:

c) ein Kugelventil mit einer Ventilkugel (20) und mit einem Ventilsitz (21) aus hartem Material,

d) einen Betätigungsstößel (22) zum Bewegen der Kugel in ihre Schließstellung,

e) einen Betätigungsstift (23), welcher von der der Auflagefläche der Ventilkugel (20) abgewandten Seite derart in den Ventilsitz (21) hineinragt, daß bei zurückgezogenem Betätigungsstößel (22) die Ventilkugel aufgrund von Federkraft aus dem Sitz gedrückt wird und das Ventil öffnet,

f) eine die Ventilkammer (28) abdichtende Membran (25), wobei der Betätigungsstößel (22) auf der der Ventilkammer abgewandten Seite der Membran angeordnet ist, und

g) einen Ventilkörper (1) aus Perfluoralkoxy, in welchem der Ventileinlaß (3, 27), die Ventilkammer (28) sowie der Ventilauslaß (4) verlaufen.

2. Mischventil nach Anspruch 1, dadurch gekennzeichnet, daß die Ventilkugel (20) und der Ventilsitz (21) aus Rubin oder Saphir bestehen.

3. Mischventil nach Anspruch 2, gekennzeichnet durch einen mit seiner einen Seite flach auf der Membran (25) aufliegenden Kugelhalter (26) zum Aufnehmen der Ventilkugel (20).

4. Mischventil nach Anspruch 3, dadurch gekennzeichnet, daß der Kugelhalter (26), der Betätigungsstift (23) und das Auslaßstück (4) aus rostfreiem Stahl bestehen.

5. Mischventil nach Anspruch 3, dadurch gekennzeichnet, daß der Kugelhalter (26) aus Keramik, der Betätigungsstift (23) und die Feder (24) aus Titan und das Auslaßstück (4) aus Glas bestehen.

6. Mischventil nach einem der vorhergehenden Ansprüche, dadurch gekennzeichnet, daß jede der Ventileinheiten (Fig. 1a; Fig. 1b; Fig. 1c) lösbar verbunden ist mit einem Mittelstück (7, 8) mit einem für alle Ventileinheiten gemeinsamen Auslaßkanal, in welchen die Ventilauslässe (4) der Ventileinheiten (Fig. 1a, Fig. 1b, Fig. 1c) münden.

7. Mischventil nach einem der vorhergehenden Ansprüche, dadurch gekennzeichnet, daß ein Klammerelement (12) vorgesehen ist, welches die Ventileinheiten und das Mittelstück (7, 8) zu einem Mischventilblock zusammenfaßt, derart, daß die Ventilauslässe (4) in den gemeinsamen Auslaßkanal des Mittelstücks münden.

8. Mischventil nach Anspruch 6 oder 7, dadurch gekennzeichnet, daß das Mittelstück (8) aus einem spritzbaren lösungsmittelbeständigen Kunststoff besteht.

## Revendications

1. Soupape mélangeuse pour mélanger plusieurs liquides dans une proportion de mélange prédéterminée, notamment pour la chromatographie liquide en vue de produire un gradient de solvant, comportant les composants suivants:

a) un nombre, correspondant au nombre de liquides à mélanger, d'unités de soupape comportant chacune une entrée de soupape pour l'introduction du liquide correspondant dans une chambre de soupape, une sortie de soupape correspondante pour la décharge du liquide, un élément de fermeture correspondant pour l'interruption de l'écoulement de liquide entre l'entrée et la sortie de soupape, ainsi que respectivement un élément d'actionnement de l'élément de fermeture et

b) un conduit de décharge relié à chacune des sorties de soupape, caractérisée en ce que chacune des unités de soupape comprend:

c) une soupape à bille, pourvue d'une bille (20) et d'un siège (21) en matériau dur,

d) un poussoir d'actionnement (22) pour déplacer la bille jusque dans sa position de fermeture,

e) une tige d'actionnement (23), qui pénètre dans le siège de soupape (21), du côté opposé à la surface d'appui de la bille de soupape (20), de telle sorte que, lors d'une rétraction du poussoir d'actionnement (22), la bille de soupape puisse être écartée de son siège sous la force d'un ressort et ouvre la soupape,

f) une membrane (25) assurant l'étanchéité de la chambre de soupape (28), le poussoir d'actionnement (22) étant disposé du côté de la membrane qui est opposé à la chambre de soupape, et

g) un corps de soupape (1) en perfluoralkoxy, dans lequel sont disposées l'entrée de soupape (3, 27), la chambre de soupape (28) ainsi que la sortie de soupape (4).

2. Soupape mélangeuse selon la revendication 1, caractérisée en ce que la bille (20) et le siège (21) de la soupape sont formés de rubis ou de saphir.

3. Soupape mélangeuse selon la revendication 2, caractérisée par un support de bille (26), s'appuyant d'un côté à plat contre la membrane (25) pour recevoir la bille de soupape (20).

4. Soupape mélangeuse selon la revendication 3, caractérisée en ce que le support de bille (26), la tige d'actionnement (23) et la pièce de sortie (4) sont formés d'acier inoxydable.

5. Soupape mélangeuse selon la revendication 3, caractérisée en ce que le support de bille (26) est formé de céramique, la tige d'actionnement (23) et le ressort (24) sont formés de titane et la pièce de sortie (4) est formée de verre.

6. Soupape mélangeuse selon une des revendications précédentes, caractérisée en ce que chacune des unités de soupape (figure 1a; figure 1b, figure 1c) est relié de façon séparable avec une pièce centrale (7, 8) comportant un canal commun de décharge pour toutes les unités de soupape et dans lequel débouchent les sorties (4) des unités de soupape (figure 1a; figure 1b; figure 1c).

7. Soupape mélangeuse selon une des revendications précédentes, caractérisée en ce qu'il est prévu un élément de serrage (12), qui assemble les unités de soupape et la pièce centrale (7, 8) sous la forme d'un bloc de soupape mélangeuse de telle sorte que les sorties de soupape (4) débouchent dans le canal commun de décharge de la pièce centrale.

8. Soupape mélangeuse selon une des revendications 6 ou 7, caractérisée en ce que la pièce centrale (8) se compose d'une matière plastique moulable par injection et résistant aux solvants.

## Claims

1. A mixing valve for mixing a plurality of liquids in a predetermined mixing ratio, in particular for liquid chromatography for producing a solvent gradient, comprising the following components:

a) a number of valve units corresponding to the number of liquids to be mixed, each valve unit having a valve inlet for intake of the liquid into a valve chamber, having a valve outlet for exit of the liquid, having a closing element for interrupting liquid flow between the valve inlet and the valve outlet, and having an actuating element for actuating the closing element, and

b) an output line connected with each of the valve outlets, characterized in that each of the valve units comprises:

c) a ball valve having a valve ball (20) and a valve seat (21) made of a hard material,

d) an actuating stem (22) for moving the ball into its closed position,

e) an actuating pin (23) projecting from the side opposite the bearing face of the valve ball (20) into the valve seat (21) in such a manner that in the retracted position of the actuating stem (22) the valve ball is lifted off of its seat due to spring action so that the valve opens,

f) a diaphragm (25) for sealing the valve chamber (28), with the actuating stem (22) being arranged on the side of the diaphragm turned away from the valve chamber, and

g) a valve body (1) made of perfluor alcoxy in which the valve inlet (3, 27), the valve chamber (28), and the valve outlet (4) are arranged.

2. A mixing valve as in claim 1, characterized in that the valve ball (20) and the valve seat (21) are made of ruby or sapphire.

3. A mixing valve as in claim 2, characterized by a ball holder (26) for receiving the valve ball (20), the ball holder having a flat surface arranged on the diaphragm (25).

4. A mixing valve as in claim 3, characterized in that the ball holder (26), the actuating pin (23), and the valve outlet piece (4) are made of stainless steel.

5. A mixing valve as in claim 3, characterized in that the ball holder (26) is made of ceramics, the actuating pin (23) and the spring (24) are made of titanium, and the valve outlet piece (4) is made of glass.

6. A mixing valve as in any of the preceding claims, characterized in that each of the valve units (Fig. 1a; Fig. 1b; Fig. 1c) are detachably connected with a central member (7, 8) having a common outlet channel for all valve units into which the valve outlets (4) of the valve units (Fig. 1a; Fig. 1b; Fig. 1c) lead.

7. A mixing valve as in any of the preceding claims, characterized in that a clamping element (12) is provided which combines the valve units and the central member (7, 8) to a mixing valve block in such a way that the valve outlets (4) lead into the common outlet channel of the central member.

8. A mixing valve as in claim 6 or 7, characterized in that the central member (8) is made of a plastic material which is resistant to solvents and suitable for injection molding.

FIG. 1f

FIG. 1d

12

6

FIG. 1a

3

4

5

11

8

FIG. 1c

2

1

9

10

7

FIG. 1e

FIG. 1b

EP 0 256 161 B1

FIGUR 2

EP 0 256 161 B1